# EUROPÄISCHE PATENTSCHRIFT

(11) **EP 3 505 320 B1**
(45) Veröffentlichungstag und Bekanntmachung des Hinweises auf die Patenterteilung: **14.04.2021**
(21) Anmeldenummer: 18215292.6
(22) Anmeldetag: 21.12.2018
(51) Int. Cl.: B29B 11/16, B29C 70/44, B29C 35/02, B29C 35/12

(54) **VERFAHREN UND VORRICHTUNG ZUR HERSTELLUNG EINES FASERVORFORMLINGS**
METHOD AND DEVICE FOR PRODUCING A FIBRE PREFORM
PROCÉDÉ ET DISPOSITIF DE FABRICATION D'UNE PRÉFORME FIBREUSE

(30) Priorität: 29.12.2017 DE 102017223875
(43) Veröffentlichungstag der Anmeldung: 03.07.2019
(73) Patentinhaber: Premium AEROTEC GmbH, 86179 Augsburg (DE)
(72) Erfinder: KUNTZ, Julian, 86179 Augsburg (DE); HEMMEN, Alexander, 26169 Friesoythe (DE); MÄNNICH, Ralph, 86551 Aichach (DE); WANNER, Margarita, 86316 Friedberg (DE)
(74) Vertreter: LKGLOBAL Lorenz & Kopf PartG mbB Patentanwälte

(56) Entgegenhaltungen:
- EP-A1- 2 047 972
- EP-A1- 2 954 994
- WO-A1-2017/022667
- JP-A- 2010 115 867
- US-A1- 2006 249 883

## Beschreibung

Die vorliegende Erfindung betrifft ein Verfahren und eine Vorrichtung zur Herstellung eines Faservorformlings.

Strukturbauteile für einen Rumpf eines Luftfahrzeugs, wie Spante und Stringer, werden zunehmend aus Faserverbundwerkstoffen hergestellt. Derartige Strukturbauteile werden üblicherweise aus vorgeformten Faservorformlingen hergestellt, welche aus einer Vielzahl provisorisch miteinander verbundener Faserlagen gebildet sind. Zur Herstellung des Strukturbauteils wird der vorgeformte Faservorformling dann mit einem Matrixmaterial infiltriert. Die Faservorformlinge können auch bereits mit einem Matrixmaterial vorimprägniert sein, also als sogenannte Prepregs vorliegen, wobei das Matrixmaterial zur Herstellung des Strukturbauteils gehärtet wird.

Die Faservorformlinge werden üblicherweise durch das Anlegen mehrerer Faserlagen an einen Formkern hergestellt. Beispielsweise beschreibt die US 2009/0261199 A1 ein Verfahren zur Herstellung eines Faservorformlings, bei dem eine Vielzahl von Faserlagen auf einen Formkern abgelegt werden, wobei eine seitlicher Randbereich der Faserlagen über einen Rand des Formkerns übersteht und auf einer seitlich des Formkerns angeordneten Ablageplatte aufliegt. Die Faserlagen, der Formkern und die Ablageplatte werden mit einer Folie luftdicht abgedeckt. Zum Anlegen der Faserlagen an eine seitliche Oberfläche des Formkerns wird die Auflageplatte unter den Faserlagen entfernt und ein Vakuum unter der Folie erzeugt, wodurch diese die Faserlagen an den Formkern presst.

Die EP 2 954 994 A1 beschreibt ein Verfahren zum Umformen von Fasermatten, wobei ein Stapel aus Fasermatten auf eine Ablagefläche, welche durch eine Oberfläche eines Formteils und durch seitlich des Formteils angeordnete Stützflächen gebildet ist, abgelegt wird. Anschließend wird dieser Aufbau durch eine Vakuumfolie abgedeckt und evakuiert, sodass die Fasermatten an die Ablagefläche angepresst werden. Zum Umformen werden die Stützflächen und das Formteil relativ zueinander verfahren, so dass die Fasermatten an die Oberfläche des Formteils angelegt werden. Ferner erfolgt ein Heizen der Fasermatten mittels einer Heizeinrichtung vor, nach oder während des Umformens. Ähnliche Verfahren sind in der EP 2 047 972 A1, der US 2006/0249883 A1, WO 2017/022667 A1 und der JP 2010-115867 A beschrieben.

Es ist Aufgabe der vorliegenden Erfindung, ein Verfahren und eine Vorrichtung bereitzustellen, mit dem bzw. mit der ein Faservorformling auf effiziente Weise und mit hoher Qualität herstellbar ist.

Diese Aufgabe wird jeweils durch ein Verfahren mit den Merkmalen des Anspruchs 1, durch eine Vorrichtung mit den Merkmalen des Anspruchs 7 und durch eine Vorrichtung mit den Merkmalen des Anspruchs 11 gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist ein Verfahren zur Herstellung eines Faservorformlings vorgesehen. Gemäß diesem Verfahren erfolgt zunächst ein Auflegen einer Fasermatte auf eine Ablageoberfläche, welche durch eine Stegfläche eines Formkerns, eine erste Stützoberfläche einer ersten Stützeinrichtung und eine zweite Stützoberfläche einer zweiten Stützeinrichtung gebildet ist, wobei die erste Stützoberfläche und die zweite Stützoberfläche sich jeweils seitlich an die Stegfläche des Formkerns anschließen. Die eine oder mehrere Lagen eines Fasermaterials aufweisende, sich flächig erstreckende Fasermatte wird in diesem Schritt auf eine Ablageoberfläche gelegt, die durch den Formkern sowie Stützeinrichtungen, die auch als Drapierschwerter oder Ablagetische bezeichnet werden können, gebildet ist. Natürlich können auch mehrere Fasermatten auf die Stützoberfläche abgelegt werden.

Der Formkern weist eine erste Oberfläche, die vorgenannte Stegfläche auf, die sich in einer Quer- und einer Längsrichtung erstreckt. Ferner weist der Formkern eine erste sich quer zu der Stegfläche erstreckende Seitenfläche und eine sich quer zu der Stegfläche erstreckende zweite Seitenfläche auf, wobei die erste und die zweite Seitenfläche des Formkerns einander abgewandt orientiert sind und gemeinsam mit der Stegfläche zumindest teilweise eine Außenoberfläche des Formkerns bilden. Der durch die Stegfläche und die Seitenflächen gebildete Teil der Außenoberfläche des Formkerns entspricht hierbei der Formgebung des herzustellenden Faservorformlings.

Die Stützeinrichtungen weisen jeweils eine Stützoberfläche auf, die insbesondere Eben oder gekrümmt ausgebildet sein kann. Die Stützeinrichtungen sind zur Bildung der Ablageoberfläche oder Ablagefläche in Bezug auf die Querrichtung jeweils seitlich neben dem Formkern angeordnet. Der Formkern ist in Bezug auf die Querrichtung zwischen den Stützeinrichtungen gelegen, wobei die Stützflächen und die Stegfläche die Ablageoberfläche bilden. Auf diese Ablagefläche wird die Fasermatte abgelegt, wobei ein zentraler Bereich der Fasermatte auf der Stegfläche des Formkerns abgelegt wird und zwei entgegengesetzt zueinander gelegene Randbereiche der Fasermatte auf den jeweiligen Stützoberflächen abgelegt werden. Durch dieses Ablegen der Randbereich der Fasermatte auf die Stützoberflächen werden diese Bereiche gestützt und ein undefiniertes Umknicken der Randbereiche wird vorteilhaft vermieden.

In einem weiteren Schritt des Verfahrens erfolgt ein Abdecken der Fasermatte mit einer elastisch verformbaren gasdichten Folie. Mittels der Folie wird ein evakuierbarer Arbeitsraum zwischen der Folie und der Ablageoberfläche gebildet oder allgemein ein den Formkern und die Stützeinrichtungen sowie die darauf abgelegte Fasermatte enthaltender Arbeitsraum.

Weiterhin wird die Fasermatte an die Ablageoberfläche durch Erzeugen eines Unterdrucks zwischen der Folie und der Ablageoberfläche flächig an die Ablageoberfläche angepresst. Hierbei wird der Arbeitsraum evakuiert bzw. ein Vakuum erzeugt, was dazu führt, dass die Folie an die Stützeinrichtungen sowie den Formkern, auf denen die Fasermatte liegt, angezogen wird und dadurch die Fasermatte flächig an die Ablageoberfläche anpresst. Dadurch wird die Fasermatte vorteilhaft zusätzlich kompaktiert.

Anschließend erfolgt ein Anlegen der Fasermatte an die sich quer zu der Stegfläche erstreckende Seitenflächen des Formkerns durch Bewegen der Stützeinrichtungen und des Formkerns relativ zueinander derart, dass ein Niveauunterschied zwischen der Stegfläche des Formkerns und den Stützflächen der Stützeinrichtungen vergrößert wird. In diesem Schritt werden unter der Wirkung des Unterdrucks bzw. Vakuums die Stützflächen entlang der Seitenflächen des Formkerns von der Stegfläche weg bewegt, was durch Bewegen der Stützeinrichtungen und/oder Bewegen des Formkerns realisiert werden kann. Durch diese Relativbewegung werden die Randbereiche der Fasermatte, welche durch die Folie an Seitenflächen des Formkerns angedrückt werden, von den Stützoberflächen der Stützeinrichtungen abgezogen. Die Randbereiche der Fasermatte gleiten somit entlang der jeweiligen Stützoberfläche, wobei die Folie die Randbereiche während des Gleitens an die jeweilige Stützoberfläche andrückt, was zu einer Reibungskraft zwischen der Stützoberfläche und der Fasermatte führt. Dies verhindert in zuverlässiger Weise eine Faltenbildung in der Fasermatte sowie eine ungewollte Verschiebung einzelner Fasern oder Faserlagen der Fasermatte relativ zueinander.

Gemäß einer Ausführungsform des Verfahrens setzen die erste Stützoberfläche der ersten Stützeinrichtung und die zweite Stützoberfläche der zweiten Stützeinrichtung die Stegfläche des Formkerns beim Ablegen der Fasermatte stetig fortsetzen. Beispielsweise können hierzu die Stützoberflächen und die Stegfläche in einer Ebene gelegen sein bzw. eine solche bilden. Allgemein kann eine Kante der jeweiligen Stützoberfläche auf demselben Niveau gelegen sein, wie eine Kante der Stegfläche des Formkerns, die der jeweiligen Kante der Stützoberfläche zugewandt ist. Beim Ablegen der Fasermatte beträgt der Niveauunterschied zwischen den Kanten der Stegfläche und den jeweiligen Kanten der Stützoberflächen somit vorzugsweise Null. Dies bietet den Vorteil, dass die Fasermatte beim Ablegen selbst nicht verformt wird, was die Gefahr der Faltenbildung weiter verringert. Ferner wird dadurch ein automatisiertes Ablegen erleichtert.

Gemäß einer weiteren Ausführungsform ist vorgesehen, dass das Anlegen der Fasermatte an die Seitenflächen des Formkerns ein Absenken der ersten und der zweiten Stützeinrichtungen gegenüber der Stegfläche des Formkerns oder ein Anheben des Formkerns gegenüber der ersten und der zweiten Stützoberfläche umfasst. Das Anheben des Formkerns bietet den Vorteil, dass lediglich eine Komponente, nämlich der Formkern, bewegbar gelagert ist. Das Absenken der Stützeinrichtungen bietet hingegen der Vorteil, dass diese jeweils einzeln bzw. mit individuellen Geschwindigkeiten bewegt werden können.

Erfindungsgemäß umfasst das Verfahren zusätzlich ein Erwärmen der Fasermatte, wodurch ein in der Fasermatte enthaltenes Bindermaterials aktiviert wird, um die Fasern der Fasermatte in derjenigen Position, die diese durch das Anlegen der Fasermatte an die Seitenflächen des Formkerns erhalten haben, zu fixieren. Hierbei ist in der Fasermatte ein Binder enthalten, beispielweise in Form eines pulverförmigen Epoxid- oder Thermoplastmaterials, das beispielsweise auf eine Unterseite der Fasermatte aufgebracht ist, welche beim Ablegen der Fasermatte auf die Ablageoberfläche abgelegt wird. Dieser Binder wird durch die Erwärmung aktiviert, was zu einem Härten oder Schmelzen und Erstarren des Binders und damit zu einer Fixierung der Form oder Gestalt der Fasermatte führt. Dies erleichtert vorteilhaft die Weiterverarbeitung des Faservorformlings. Falls sogenannte Prepregs als Fasermatte verwendet werden, also mit einem Matrixmaterial vorimprägnierte Matten, wird durch das Erwärmen das Matrixmaterial in seiner Viskosität verändert, was zu einem Zusammenkleben und damit Fixieren der Fasern führt.

Erfindungsgemäß erfolgt das Erwärmen zum Aktivieren des Bindermaterials durch Erzeugen eines elektrischen Stromflusses durch elektrisch leitende Fasern der Fasermatte. Hierbei wird in in der Fasermatte enthaltenen elektrisch leitenden Fasern, beispielsweise Kohlefasern, ein elektrischer Stromfluss erzeugt. Da die Fasern der Fasermatte einen elektrischen Widerstand bilden, werden diese infolge des elektrischen Stromflusses erwärmt. Auf diese Weise erfolgt eine unmittelbare Erwärmung des Materials der Fasermatte. Dies bietet den Vorteil, dass Wärmeverluste deutlich reduziert werden, was sowohl den Energieaufwand zum Erwärmen reduziert, als auch das Erwärmen deutlich beschleunigt. Darüber hinaus kann ein Spannungsabfall an dem durch die Fasern gebildeten elektrischen Widerstand gemessen werden. Auf diese Weise wird eine Kontrolle der Temperatur der Fasermatte beim Erwärmen vereinfacht, bei steigenden Temperaturen der Widerstand sinkt (NTC-Verhalten). Beispielsweise kann dadurch die Gefahr einer Überhitzung und einer damit einhergehenden Beschädigung der Fasermatte verringert werden.

Ferner ist auch denkbar, bereichsweise über eine flächige Erstreckung der Fasermatte einen elektrischen Stromfluss durch die elektrisch leitenden Fasern zu erzeugen oder bereichsweise verschiedene elektrische Strom- bzw. Leistungsdichten zu erzeugen. Dadurch wird, beispielsweise bei variierenden Materialdicken, eine noch gleichmäßigere Erwärmung erzielt.

Gemäß einer Ausführungsform wird der elektrische Stromfluss dadurch erzeugt, dass eine an der ersten Stützoberfläche angeordnete erste Kontaktschiene und eine an der zweiten Stützoberfläche angeordnete zweite Kontaktschiene mit einer elektrischen Spannungsquelle verbunden werden. In den Stützflächen sind hierbei jeweils elektrisch leitende Kontaktschienen, z.B. Kupferschienen, vorgesehen, die an eine gemeinsame Spannungsquelle angeschlossen sind. Die erste Kontaktschiene bildet beispielsweise einen elektrischen Pluspol, die zweite Kontaktschiene einen elektrischen Minuspol. In der Fasermatte enthaltene elektrisch leitende Fasern, beispielsweise Kohlefasern, liegen an den Kontaktschienen an und verbinden diese dadurch elektrisch leitend.

Auch Klemmen oder dergleichen, die an die Fasermatte angeschlossen werden können zur Erzeugung eines Stromflusses durch die Fasermatte genutzt werden. Gemäß einer weiteren Ausführungsform wird der elektrische Stromfluss alternativ oder zusätzlich dadurch erzeugt, dass zumindest zwei an der Stegfläche und/oder den Seitenflächen des Formkerns angeordnete Formkern-Kontaktschienen mit einer elektrischen Spannungsquelle verbunden werden.

Gemäß einer weiteren Ausführungsform erfolgt nach dem Ablegen der Fasermatte auf die Ablageoberfläche und vor dem Auflegen der Folie ein Anpressen einer ersten Druckplatte auf einen ersten Randbereich der auf der Ablageoberfläche abgelegten Fasermatte, wobei der erste Randbereich der Fasermatte auf der ersten Stützfläche abgelegt ist, und einer zweiten Druckplatte auf einen zweiten Randbereich der auf der Ablageoberfläche abgelegten Fasermatte, wobei der zweite Randbereich der Fasermatte auf der zweiten Stützfläche abgelegt ist, wobei die erste Druckplatte in einem konstanten Abstand zu der ersten Stützoberfläche und die zweite Druckplatte in einem konstanten Abstand zu der zweiten Stützoberfläche gehalten wird. Gemäß dieser Ausführungsform werden die Randbereiche der Fasermatte zwischen der Stützoberfläche und einer jeweiligen Druckplatte oder Druckleiste eingeklemmt bzw. durch die Druckplatte an die Stützoberfläche gedrückt. Dies bietet den Vorteil, dass eine Kraft, die beim Abziehen der Randbereiche der Fasermatte von der Stützoberfläche auf die Randbereiche der Fasermatte wirkt, noch genauer eingestellt werden kann. Dadurch wird die Gefahr der Faltenbildung weiter verringert.

Gemäß einem weiteren Aspekt der Erfindung ist eine Vorrichtung zur Herstellung eines Faservorformlings vorgesehen. Die Vorrichtung ist insbesondere zur Durchführung des voranstehend beschriebenen Verfahrens geeignet. Die zum Verfahren offenbarten Vorteile und Merkmale gelten somit in analoger Weise auch für die Vorrichtung und umgekehrt.

Die Vorrichtung weist einen Formkern mit einer Stegfläche, einer sich quer zu der Stegfläche entlang einer Hubrichtung erstreckenden ersten Seitenfläche und einer sich quer zu der Stegfläche entlang der Hubrichtung erstreckenden zweiten Seitenfläche. Die erste und die zweite Seitenfläche des Formkerns sind einander abgewandt orientiert und bilden gemeinsam mit der Stegfläche eine Außenoberfläche des Formkerns. Der Formkern bildet insbesondere eine Positivform für die Kontur bzw. den Querschnitt des herzustellenden Faservorformlings.

Die Vorrichtung weist ferner eine erste Stützeinrichtung mit einer ersten Stützoberfläche auf, wobei die erste Stützeinrichtung auf einer durch die erste Seitenfläche des Formkerns definierten ersten Seite des Formkerns angeordnet ist. Weiterhin ist eine zweite Stützeinrichtung mit einer zweiten Stützoberfläche vorgesehen, wobei die zweite Stützeinrichtung auf einer durch die zweite Seitenfläche des Formkerns definierten zweiten Seite des Formkerns angeordnet ist. Die Stützeinrichtungen sind somit seitlich des Formkerns angeordnet bzw. der Formkern ist zwischen den Stützeinrichtungen gelegen, wobei sich die Stützoberflächen der Stützeinrichtungen entlang des Formkerns, insbesondere entlang der Stegfläche des Formkerns erstrecken.

Weiterhin weist die Vorrichtung eine Folieneinrichtung mit einer gasdichten elastisch verformbaren Folie oder Membran zum Herstellen eines evakuierbaren Zwischenraums zwischen dem Formkern, den Stützeinrichtungen und der Folie auf. Die Folie weist eine flächige Erstreckung auf, die groß genug ist, um die Stützoberflächen sowie die Stegoberfläche abzudecken, insbesondere vollständig zu überdecken. Optional können in die Folie Folien-Kontaktschienen integriert sein, welche mit eine elektrische Spannungsquelle verbindbar sind, um zum Erwärmen der Fasermatte einen elektrischen Stromfluss durch elektrisch leitende Fasern der Fasermatte zu erzeugen.

Zum Evakuieren des Zwischenraums ist eine Evakuierungseinrichtung, beispielweise in Form einer Saugeinrichtung bzw. einer Vakuumpumpe, vorgesehen. Diese ist in fluidleitender Weise an den Zwischenraum angeschlossen oder mit diesem verbindbar. Bei einer Evakuierung des Zwischenraums mittels der Evakuierungseinrichtung wird die Folie an die Stützoberflächen sowie die Außenoberfläche des Formkerns angesaugt.

Ferner ist eine Hubeinrichtung vorgesehen, mittels derer der Formkern und die Stützeinrichtungen relativ zueinander in der Hubrichtung bewegbar sind. Mit dieser Hubeinrichtung kann beispielsweise der Formkern gegenüber den Stützeinrichtungen bewegt werden, insbesondere kann die Stegfläche relativ zu den Stützflächen angehoben oder abgesenkt werden. Alternativ kann auch der Formkern ortsfest und die Stützeinrichtungen mittels der Hubeinrichtung gegenüber dem Formkern bewegbar sein, insbesondere können die Stützoberflächen relativ zu der Stegfläche abgesenkt oder angehoben werden.

Mit der beschriebenen Vorrichtung kann beispielsweise ein Faservorformling gemäß dem voranstehend beschriebenen Verfahren vorteilhaft hergestellt werden. Die Bewegbarkeit der Stegfläche und der Stützoberflächen relativ zueinander bietet insbesondere den Vorteil, dass eine Fasermatte sukzessive von der Stegfläche aus an die Seitenflächen des Formkerns anlegbar ist, wobei Randbereiche der Fasermatte von den Stützflächen abgezogen werden. Auf diese Weise wird die Gefahr von Faltenbildung in der Fasermatte verringert. Erfindungsgemäß ist vorgesehen, dass die erste Stützeinrichtung eine über die erste Stützoberfläche hervorstehende erste Kontaktschiene und die zweite Stützeinrichtung eine über die zweite Stützoberfläche hervorstehende zweite Kontaktschiene aufweist, wobei die erste und die zweite Kontaktschiene mit einer elektrischen Spannungsquelle verbindbar sind. Die Kontaktschienen bilden demnach elektrisch leitende Oberflächenbereiche, welche mit einer elektrischen Spannungsquelle verbindbar sind. Auf diese Weise wird eine konstruktiv sehr einfache Heizeinrichtung realisiert, wobei eine der Schienen, beispielsweise die erste Kontaktschiene, einen Pluspol und die andere Schiene, beispielsweise die zweite Kontaktschiene einen Minuspol bildet. Die Kontaktschienen sind bei einer Umformung einer Fasermatte durch elektrisch leitende Fasern der Fasermatte elektrisch miteinander verbunden. Die an den Fasern aufgrund deren elektrischen Widerstands abfallende Spannung dient zur Erwärmung der Fasermatte. Die so realisierte Heizeinrichtung weist gegenüber üblichen Heizeinrichtungen, wie Wärmestrahlern, einen verringerten Energiebedarf auf. Auch kann in sehr kurzer Zeit eine Erwärmung der Fasermatte realisiert werden.

Gemäß einer weiteren Ausführungsform erstreckt sich die erste Kontaktschiene entlang eines der ersten Seitenfläche des Formkerns zugewandten Randbereichs der ersten Stützeinrichtung und die zweite Kontaktschiene entlang eines der zweiten Seitenfläche des Formkerns zugewandten Randbereichs der zweiten Stützeinrichtung.

Gemäß einer weiteren Ausführungsform ist die erste Kontaktschiene in einer in der ersten Stützoberfläche ausgebildeten ersten Nut und die zweite Kontaktschiene ist in einer in der zweiten Stützoberfläche ausgebildeten ersten Nut angeordnet. Die Kontaktschienen sind demnach in die Stützoberflächen integriert. Damit sind bei einem vorbestimmten Überstand über die Stützoberfläche größere Leiterquerschnitte der Kontaktschienen realisierbar, wodurch die elektrische Leistung vergrößert werden kann.

Alternativ oder zusätzlich zu der ersten und der zweiten Kontaktschiene weist der Formkern erfindungsgemäß eine erste Formkern-Kontaktschiene und eine zweite Formkern-Kontaktschiene auf, wobei die Formkern-Kontaktschienen jeweils über die Stegfläche und/oder die Seitenflächen des Formkerns hervorstehen. Gemäß dieser Ausführungsform sind alternativ oder zusätzlich zu den an den Stützoberflächen vorgesehenen Kontaktschienen Formkern-Kontaktschienen in den Formkern integriert.

Gemäß einer weiteren Ausführungsform ist vorgesehen, dass die Vorrichtung zusätzlich eine erste Druckplatte und eine zweite Druckplatte aufweist, wobei die erste Druckplatte mittels einer ersten Positioniereinrichtung in einem vorbestimmten Abstand relativ zu der ersten Stützoberfläche positionierbar ist, und wobei die die zweite Druckplatte mittels einer zweiten Positioniereinrichtung in einem vorbestimmten Abstand relativ zu der zweiten Stützoberfläche positionierbar ist. Die Druckplatte bildet insbesondere eine Klemmeinrichtung oder Druckleiste, mittels derer ein Faservorformling an die Stützoberfläche der jeweiligen Stützeinrichtung andrückbar ist. Die Positionierung der jeweiligen Druckplatte an der jeweiligen Stützplatte kann beispielweise durch eine oder mehrere Einstellschrauben als Positioniereinrichtung erfolgen, wobei die Einstellschrauben die Druckplatte und die jeweilige Stützeinrichtung aneinander koppeln. Durch die Druckplatten ist eine auf die Randbereiche der Fasermatte wirkende Kraft vorteilhaft einstellbar.

Auch in den Druckplatten können elektrische Kontaktschienen zum Erzeugen eines Stromflusses in Fasern der Fasermatte und damit zum Erwärmen der Fasermatten integriert sein. Die stehen hierzu über eine Oberfläche der jeweiligen Druckplatte vor.

Gemäß einer weiteren Ausführungsform ist vorgesehen, dass die Folieneinrichtung einen Rahmen aufweist, an welchem die Folie gasdicht befestigt ist. Der Rahmen hält insbesondere einen Umfangsrandbereich der Folie.

Gemäß einer weiteren Ausführungsform weist die Vorrichtung zusätzlich einen Sockel auf, auf dem der Formkern und die Stützeinrichtungen angeordnet sind. Der Sockel bildet insbesondere eine Montagefläche für die Komponenten der Vorrichtung und kann beispielsweise mit entsprechenden Schnittstellen, wie Bohrungen, Flanschen oder ähnlichem versehen sein. Ferner kann der Sockel auch Anschlussleitungen aufweisen, beispielsweise elektrische Leitungen zur Versorgung der Hubeinrichtung oder der optionalen Kontaktschienen oder Fluidleitungen zum Absaugen von Gas unter der Folie.

Ferner kann vorgesehen sein, dass der optionale Rahmen der Folieneinrichtung gasdicht an dem Sockel befestigbar ist. Beispielsweise kann der Rahmen an dem Sockel verschwenkbar gelagert sein, insbesondere zwischen einer Arbeits- oder Schließposition, in welcher der Sockel und die Folieneinrichtung eine gasdicht geschlossene Kavität ausbilden, und einer Öffnungsposition, in welcher die Folieneinrichtung den Formkern und die Stützeinrchtungen freigibt.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter einem "Faserwerkstoff" oder einem "Fasermaterial" allgemein ein Werkstoff verstanden, der aus einer Vielzahl von insbesondere fadenförmigen oder fadenstückförmigen Verstärkungsfasern, wie beispielsweise Kohle-, Glas-, Keramik-, Aramid-, Bor-, Mineral-, Natur- oder Kunststofffasern oder Mischungen aus diesen gebildet ist. Der Faserwerkstoff kann insbesondere auch mit einem Harz- oder Matrixmaterial wie z.B. einem duroplastischen, thermoplastischen, elastomeren Harz oder allgemein ein Kunststoffharz oder dergleichen imprägniert sein.

Unter einer "Fasermatte" wird hierin allgemein eine sich flächig erstreckende Komponente aus einem Fasermaterial verstanden, die zur Ausbildung eines Halbzeugs, eines Vorformlings oder eines Bauteils vorgesehen ist, insbesondere eine Komponente mit einem Umfangsrand, welcher eine Oberfläche mit vernachlässigbaren Flächeninhalt verglichen mit einem Flächeninhalt von zwei entgegengesetzt orientierten Hauptflächen der Komponente aufweist. Eine Fasermatte kann insbesondere eine oder mehrere übereinander liegende Schichten oder Lagen aus Fasermaterial aufweisen. Die einzelnen Lagen können insbesondere als Gewebe oder als Gelege, insbesondere in Form als sogenanntes non-crimp fabric (NCF), vorliegen.

Im Folgenden wird die Erfindung unter Bezugnahme auf die Figuren der Zeichnungen erläutert. Von den Figuren zeigen:
- Fig. 1: eine perspektivische Ansicht eines Faservorformlings in einer schematischen Darstellung;
- Fig. 2: eine Schnittansicht des in Fig. 1 gezeigten Faservorformlings, die sich bei einem Schnitt entlang der in Fig. 1 gezeigten Linie A-A ergibt;
- Fig. 3: eine perspektivische Ansicht eines Formkerns einer Vorrichtung gemäß einem Ausführungsbeispiel der vorliegenden Erfindung;
- Fig. 4: eine schematische Ansicht einer Vorrichtung gemäß einem Ausführungsbeispiel der vorliegenden Erfindung während der Durchführung eines Schritts eines Verfahrens gemäß einem Ausführungsbeispiel der vorliegenden Erfindung;
- Fig. 5: eine schematische Ansicht der Vorrichtung während der Durchführung eines weiteren Schritts eines Verfahrens gemäß einem Ausführungsbeispiel der vorliegenden Erfindung;
- Fig. 6: eine schematische Ansicht der Vorrichtung während der Durchführung eines weiteren Schritts eines Verfahrens gemäß einem Ausführungsbeispiel der vorliegenden Erfindung;

- Fig. 7: eine schematische Ansicht der Vorrichtung während der Durchführung eines weiteren Schritts eines Verfahrens gemäß einem Ausführungsbeispiel der vorliegenden Erfindung;
- Fig. 8: eine schematische Ansicht der Vorrichtung während der Durchführung des in Fig. 7 gezeigten Schritts zu einem späteren Zeitpunkt;
- Fig. 9: eine Detailansicht des durch den Buchstaben X gekennzeichneten Bereichs der in der Fig. 8 gezeigten Vorrichtung;
- Fig. 10: eine Draufsicht auf eine Vorrichtung nach einem Ausführungsbeispiel gemäß der vorliegenden Erfindung als schematische Darstellung;
- Fig. 11: eine schematische Ansicht einer Vorrichtung gemäß einem weiteren Ausführungsbeispiel der vorliegenden Erfindung während der Durchführung eines Schritts eines Verfahrens gemäß einem Ausführungsbeispiel der vorliegenden Erfindung; und
- Fig. 12: eine schematische Schnittansicht eines Formkerns einer Vorrichtung gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

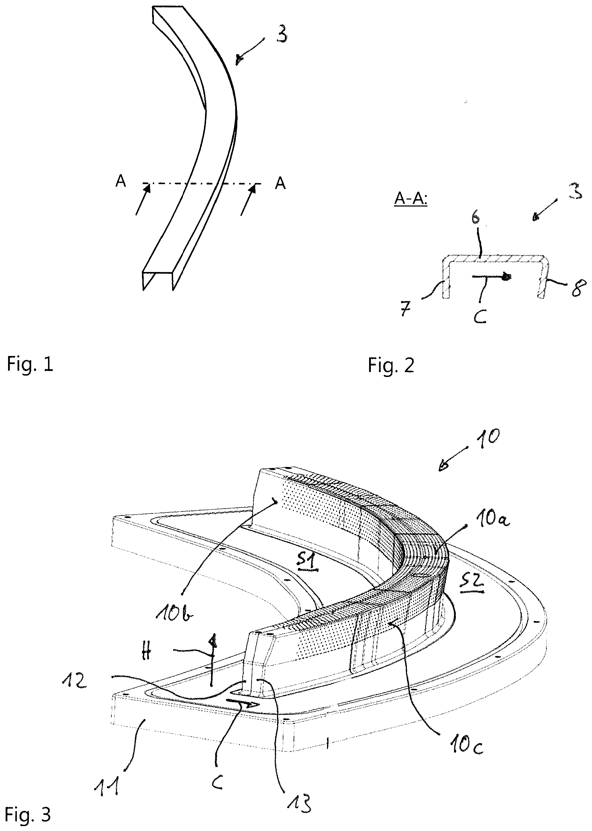

Fig. 1 zeigt beispielartig und schematisch einen Faservorformling 3. Fig. 2 zeigt eine schematische Schnittansicht des in Fig. 1 beispielhaft gezeigten Faservorformlings 3. Der Faservorformling 3 ist als ein längliches Bauteil ausgebildet, welches insbesondere eine gekrümmt verlaufende Längserstreckung aufweisen kann, beispielsweise eine bogenförmig verlaufende Längserstreckung, wie dies in Fig. 1 gezeigt ist. Der Faservorformling 3 kann insbesondere als Halbzeug zur Herstellung eines Strukturbauteils eines Luftfahrzeugs vorgesehen sein, beispielsweise zur Herstellung eines Spants.

Wie in Fig. 2 gezeigt ist, weist der Faservorformling 3 einen Quersteg 6 sowie einen ersten Seitensteg 7 und einen zweiten Seitensteg 8 auf. Der Quersteg 6 bildet den in Fig. 1 beispielhaft gezeigten Krümmungsverlauf aus und erstreckt sich zusätzlich in einer Querrichtung C. Der erste und der zweite Seitensteg 7, 8 erstrecken sich jeweils quer zu dem Quersteg 6 und bilden mit diesem einen in etwa C-förmigen oder U-förmigen Querschnitt des Faservorformlings 3 aus. Bei dem in Fig. 2 beispielhaft gezeigten Querschnitt des Faservorformlings 3 erstreckt sich der erste Seitensteg 7 in etwa senkrecht zu dem Quersteg 6, der zweite Seitensteg 8 erstreckt sich gewinkelt zu dem Quersteg 6 und bildet insbesondere eine Hinterschneidung aus.

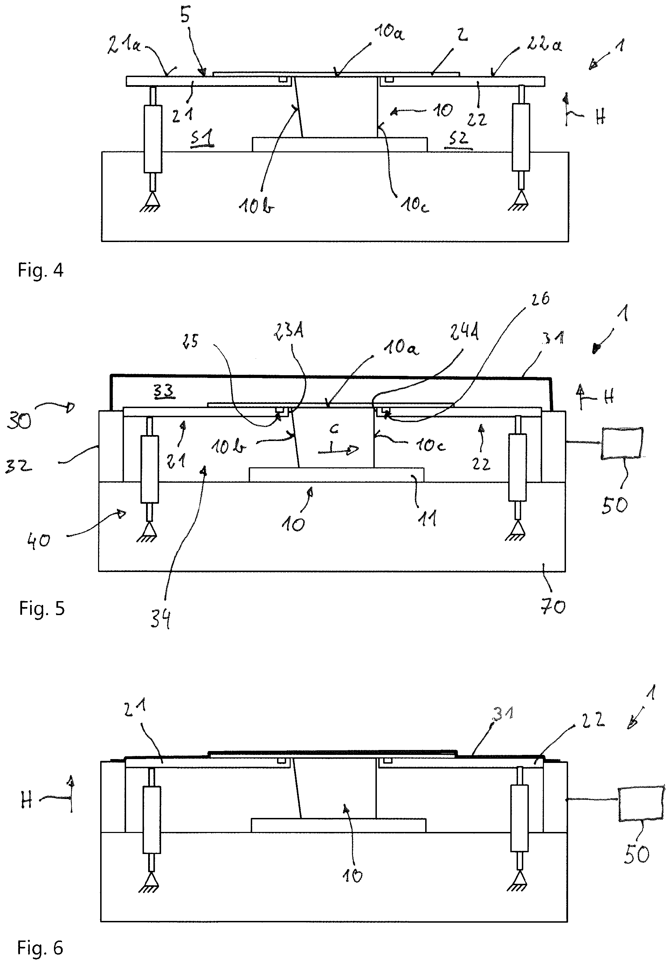

Eine Vorrichtung 1 zur Herstellung eines Faservorformlings 3, insbesondere des in den Fig. 1 und 2 schematisch gezeigten Faservorformlings 3, ist beispielhaft in Fig. 5 gezeigt. Die Vorrichtung 1 weist einen Formkern 10, eine erste Stützeinrichtung 21, eine zweite Stützeinrichtung 22, eine Folieneinrichtung 30, eine Hubeinrichtung 40, und eine Evakuierungseinrichtung 50. Wie in Fig. 5 außerdem gezeigt ist, kann zusätzlich eine optionaler Sockel 70 vorgesehen sein. Fig. 3 zeigt beispielartig eine perspektivische Ansicht des Formkerns 10. In Fig. 5 ist der Formkern 10 in einer Schnittansicht gezeigt. Der Formkern 10 bildet eine Positivform zur Herstellung des Faservorformlings 3. Das heißt, eine Außenkontur des Formkerns 10, die durch eine Außenoberfläche 10a, 10b, 10c des Formkerns 10 gebildet ist, legt den Querschnittsverlauf des herzustellenden Faservorformlings 3 fest. Der Formkern 10 kann insbesondere als ein länglicher Block ausgebildet sein, der insbesondere eine gekrümmt verlaufende Längserstreckung aufweisen kann, beispielsweise eine bogenförmig verlaufende Längserstreckung, wie dies in Fig. 3 beispielhaft gezeigt ist.

Der Formkern 10 weist eine Stegfläche 10a, eine erste Seitenfläche 10b und eine zweite Seitenfläche 10c auf. Die Stegfläche 10a bildet den optionalen Krümmungsverlauf der Längserstreckung des Formkerns 10 aus und erstreckt sich zusätzlich in einer Querrichtung C. Die erste Seitenfläche 10b erstreckt sich quer zu der Stegfläche 10a entlang einer Hubrichtung H. Die zweite Seitenfläche 10c erstreckt sich ebenfalls entlang der Hubrichtung H und quer zu der Stegfläche 10a. Wie insbesondere in den Fig. 3 und 5 gezeigt ist, sind die erste und die zweite Seitenfläche 10b, 10c des Formkerns voneinander abgewandt orientiert.

Wie in Fig. 3 beispielhaft gezeigt ist, kann der Formkern 10 an einer optionalen Grundplatte 11 angeordnet sein. Der Formkern 10 steht hierbei von der Grundplatte 11 hervor und kann insbesondere lösbar mit der Grundplatte 11 verbunden sein, beispielsweise mittels einer Verrastung (nicht gezeigt). Ferner kann der Formkern 10 in Bezug auf die Querrichtung C teilbar aus zwei Teilkernen 12, 13 zusammengesetzt sein, wie dies in Fig. 3 schematisch gezeigt ist. Ein erster Teilkern 12 weist dabei die erste Seitenfläche 10b und einen Teil der Stegfläche 10a auf. Ein zweiter Teilkern 13 weist die zweite Seitenfläche 10c und einen restlichen Teil der Stegfläche 10a auf. Ein aus Teilkernen 12, 13 zusammengesetzter Formkern 10 erleichtert ein Entfernen des Formkerns 10 nach der Herstellung des Faservorformlings 3.

Der Formkern 10 kann insbesondere aus einem Kunststoffmaterial, einem Metallmaterial oder aus Holz hergestellt sein.

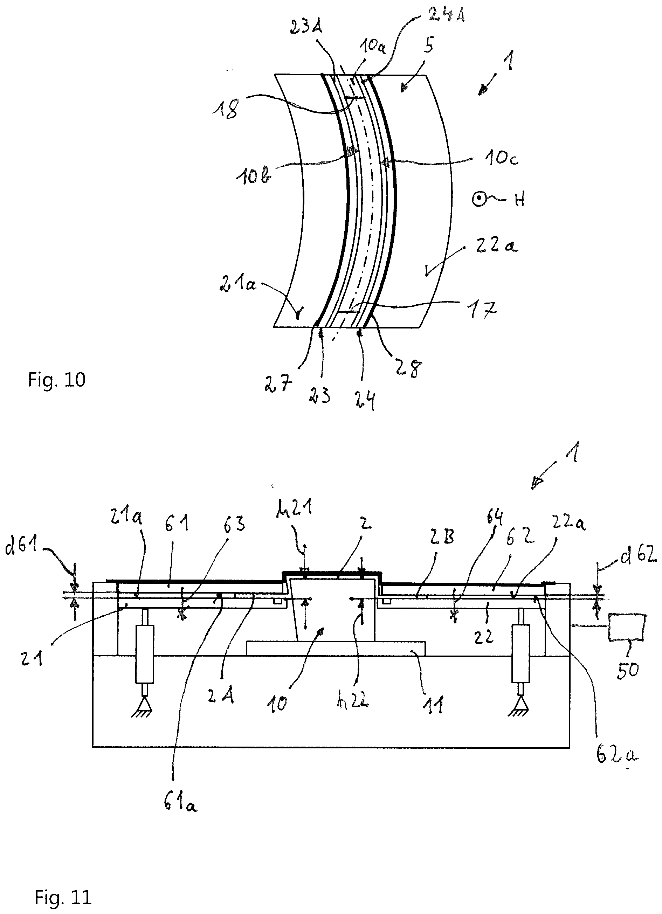

In Fig. 5 sind die Stützeinrichtungen 21, 22 in einer Schnittansicht gezeigt. In Fig. 10 ist eine Draufsicht auf die Stützeinrichtungen 21, 22 dargestellt. Die erste Stützeinrichtung 21 weist eine erste Stützfläche 21a auf. Die zweite Stützeinrichtung 22 weist eine zweite Stützfläche 22a auf. Wie in den Fig. 5 und 10 beispielhaft gezeigt ist, sind die erste und die zweite Stützeinrichtung 21, 22 jeweils als sich flächig erstreckende, plattenförmige Bauteile ausgebildet. Wie in Fig. 10 gezeigt ist, kann insbesondere vorgesehen sein, dass ein Seitenrand 23A der ersten Stützeinrichtung 21 einen Krümmungsverlauf aufweist, der einem Krümmungsverlauf der ersten Seitenfläche 10b des Formkerns 10 entspricht. Weiterhin kann vorgesehen sein, dass ein Seitenrand 24A der zweiten Stützeinrichtung 22 einen Krümmungsverlauf aufweist, der einem Krümmungsverlauf der zweiten Seitenfläche 10c des Formkerns 10 entspricht.

Wie insbesondere in den Fig. 5 und 10 schematisch gezeigt ist, weist die erste Stützeinrichtung 21 eine optionale erste Kontaktschiene 27 und die zweite Stützeinrichtung 22 eine optionale zweite Kontaktschiene 28 auf. Die erste Kontaktschiene 27 steht über die erste Stützoberfläche 21a hervor. Die zweite Kontaktschiene 28 steht über die zweite Stützoberfläche 22a hervor. Wie in den Fig. 5 und 10 beispielhaft dargestellt ist, können die erste und die zweite Kontaktschiene 27, 28 jeweils als längliche Schienen ausgebildet sein, die sich optional über die gesamte Längserstreckung der jeweiligen Stützeinrichtung 21, 22 erstrecken.

Wie in den Fig. 5 und 10 weiterhin gezeigt, ist die erste Kontaktschiene 27 optional in einem sich an den Seitenrand 23A anschließenden Randbereich 23 der ersten Stützeinrichtung 21 angeordnet und erstreckt sich entlang des Seitenrands 23A. Die zweite Kontaktschiene 28 ist optional in einem sich an den Seitenrand 24A anschließenden Randbereich 24 der zweiten Stützeinrichtung 22 angeordnet und erstreckt sich entlang des Seitenrands 24A.

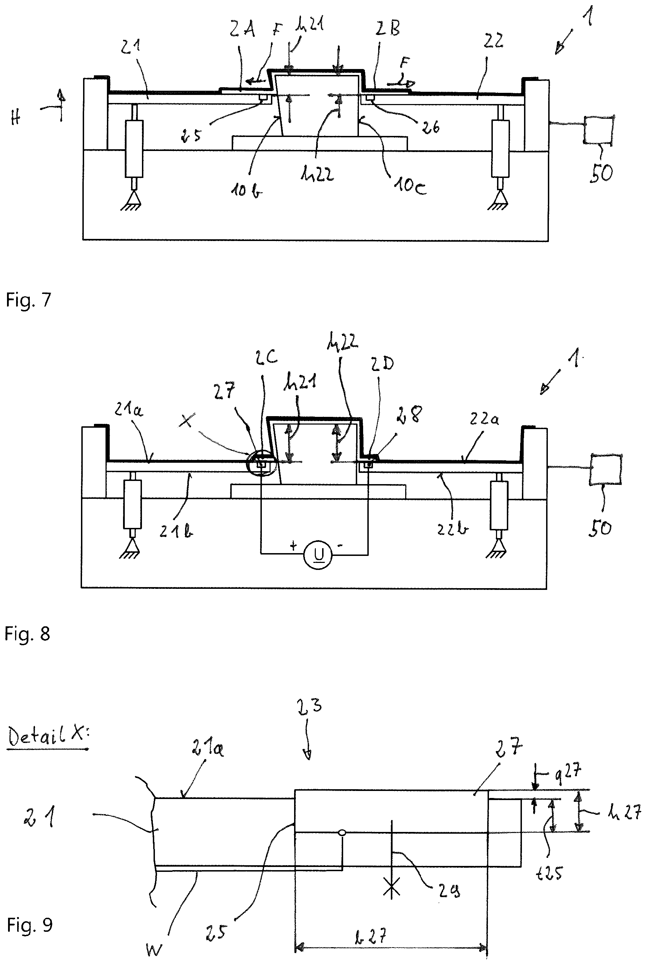

Fig. 9 zeigt im Detail eine Schnittansicht des Randbereichs 23 der ersten Stützeinrichtung 21. Wie in Fig. 9 gezeigt, kann die erste Kontaktschiene 27 insbesondere in einer in der ersten Stützoberfläche 21a ausgebildeten ersten Nut 25 angeordnet sein. Wie in Fig. 5 schematisch angedeutet, kann auch die zweite Kontaktschiene 28 in einer in der zweiten Stützoberfläche 22a ausgebildeten zweite Nut 26 angeordnet sein. Wie in Fig. 9 weiterhin erkennbar, kann die jeweilige Nut 25, 26 sowie die jeweilige Kontaktschiene 27, 28 beispielsweise eine rechteckförmige Querschnittsform aufweisen. Wie in Fig. 9 ferner gezeigt ist, weist die Nut 25 eine Nuttiefe t25 auf, die kleiner ist, als eine Höhe h27 der Kontaktschiene 27, wodurch sich ein Überstand q27 über die erste Stützfläche 21a ergibt. Allgemein kann ein Überstand einer der Kontaktschienen 27, 28 über die jeweilige Stützfläche 21a, 22a beispielsweise zwischen 10 Prozent und 20 Prozent der Nuttiefe der jeweiligen Nut 25, 26 betragen. Die Höhe h27 der Kontaktschiene 27 kann insbesondere in einem Bereich zwischen 5 mm und 15 mm liegen und beispielsweise 10 mm betragen. Ein Breite b27 der Kontaktschiene 27 kann insbesondere in einem Bereich zwischen 7 mm und 22 mm liegen und beispielsweise 15 mm betragen. Die Nuttiefe t27 liegt insbesondere in einem Bereich zwischen 4 mm und 12 mm und kann beispielsweise 8,5 mm betragen.

Die Kontaktschienen 27, 28 sind an der jeweiligen Stützeinrichtung 21, 22 befestigt. Dies kann insbesondere mittels Befestigungseinrichtungen erfolgen. Wie in Fig. 9 beispielhaft gezeigt ist, sind die Kontaktschienen 27, 28 optional mit der jeweiligen Stützeinrichtung 21, 22 verschraubt, wobei eine Befestigungsschraube 29 von Seiten einer entgegengesetzt zu der Stützfläche 21a, 22a gelegenen Rückoberfläche 21b, 22b her durch die jeweilige Stützeinrichtung 21, 22 in die jeweilige Kontaktschiene 27, 28 eingeschraubt sind. Die Befestigungsschraube 29 ist in Fig. 9 lediglich schematisch dargestellt.

Wie in Fig. 8 schematisch dargestellt, sind die erste und die zweite Kontaktschiene 27, 28 mit einer elektrischen Spannungsquelle U verbindbar. Das heißt, die Kontaktschienen 27, 28 sind jeweils mit einem Pol einer Spannungsquelle verbindbar. In Fig. 8 ist z.B. die erste Kontaktschiene 27 mit einem Pluspol der Spannungsquelle U und die zweite Kontaktschiene 28 mit einem Minuspol der Spannungsquelle U verbunden. Zum Anschluss an die Spannungsquelle U können an der Rückseitenoberfläche 21b, 22b der jeweiligen Stützeinrichtung 21, 22 verlegte Anschlussleitungen W vorgesehen sein, wie dies in Fig. 9 schematisch dargestellt ist. Ferner können mehrere hintereinander angeordnete Kontaktschienen-Sektionen vorgesehen sein (nicht gezeigt), die jeweils einzeln und unabhängig voneinander mit der Spannungsquelle U verbindbar sind.

Die Kontaktschienen 27, 28 sind jeweils aus einem elektrisch leitfähigen Material, wie beispielsweise Kupfer, Aluminium oder dergleichen, ausgebildet. Die erste und die zweite Stützeinrichtung 21, 22 sind jeweils aus einem elektrisch isolierenden Material gebildet, insbesondere einem Kunststoffmaterial, einem Holzmaterial, wie beispielsweise mitteldichte Holzfaserplatten (MDF), oder dergleichen.

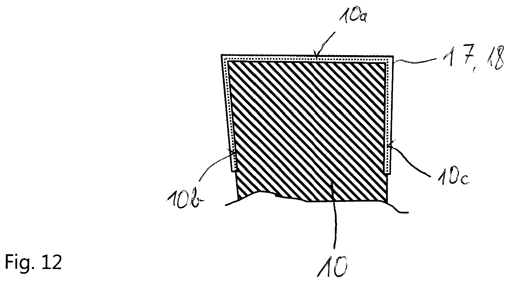

Wie in Fig. 10 erkennbar und in Fig. 12 im Detail gezeigt, kann der Formkern 10 alternativ oder zusätzlich zu den Kontaktschienen 27, 28 Formkern-Kontaktschienen 17, 18 aufweisen. Wie in Fig. 10 gezeigt, kann beispielsweise eine erste Formkern-Kontaktschiene 17 und eine zweite Formkern-Kontaktschiene 18 vorgesehen sein. Die erste und die zweite Formkern-Kontaktschiene 17, 18 können insbesondere in Bezug auf die Längserstreckung des Formkerns 10 zueinander beabstandet angeordnet sein, wie dies in Fig. 10 beispielhaft gezeigt ist. Allgemein stehen die Formkern-Kontaktschienen 17, 18 über die Stegfläche 10a und/oder über die Seitenflächen 10b, 10c des Formkerns 10 über.

Fig. 12 zeigt eine Schnittansicht des in Fig. 10 gezeigten Formkerns 10 durch die erste oder die zweite Formkern-Kontaktschiene 17, 18. Wie in Fig. 12 erkennbar ist, sind die Formkern-Kontaktschienen 17, 18 optional korrespondierend zu dem Querschnittsprofil des Formkerns 10 ausgebildet. Alternativ hierzu kann auch vorgesehen sein, dass die erste Formkern-Kontaktschiene 17 in die erste Seitenfläche 10b des Formkerns 10 integriert ist und sich entlang der Längserstreckung des Formkerns 10 erstreckt und die die zweite Formkern-Kontaktschiene 18 in die zweite Seitenfläche 10c des Formkerns 10 integriert ist und sich ebenfalls entlang der Längserstreckung des Formkerns 10 erstreckt (nicht dargestellt).

Die Formkern-Kontaktschienen 17, 18 sind jeweils aus einem elektrisch leitfähigen Material, wie beispielsweise Kupfer, Aluminium oder dergleichen, ausgebildet. Die erste und die zweite Stützeinrichtung 21, 22 sind jeweils aus einem elektrisch isolierenden Material gebildet, insbesondere einem Kunststoffmaterial, einem Holzmaterial, wie beispielsweise mitteldichte Holzfaserplatten (MDF), oder dergleichen. Ferner sind die Formkern-Kontaktschienen 17, 18 ebenfalls an die elektrische Spannungsquelle U anschließbar.

Wie in den Fig. 5 und 10 dargestellt, ist die erste Stützeinrichtung 21 auf einer durch die erste Seitenfläche 10b des Formkerns 10 definierten ersten Seite S1 des Formkerns 10 angeordnet. Der Seitenrand 23A der ersten Stützeinrichtung 21 ist dabei der ersten Seitenfläche 10b zugewandt. Die erste Stützoberfläche 21a ist, wie die Stegfläche 10a des Formkerns 10, in der Hubrichtung H orientiert. Die zweite Stützeinrichtung 22 ist auf einer durch die zweite Seitenfläche 10c des Formkerns 10 definierten zweiten Seite S2 des Formkerns 10 angeordnet. Der Seitenrand 24A der zweiten Stützeinrichtung 22 ist dabei der zweiten Seitenfläche 10c zugewandt. Die zweite Stützoberfläche 22a ist, wie die Stegfläche 10a des Formkerns 10, in der Hubrichtung H orientiert. Wie in den Fig. 5 und 10 dargestellt, ist der Formkern 10 somit in Bezug auf die Querrichtung C zwischen den Stützeinrichtungen 21, 22 angeordnet bzw. die erste Stützoberfläche 21a und die zweite Stützoberfläche 22a schließen sich jeweils seitlich an die Stegfläche 10a des Formkerns 10 an.

Die Hubeinrichtung 40 ist dazu ausgebildet, den Formkern 10 und die Stützeinrichtungen 21, 22 relativ zueinander in der Hubrichtung H zu bewegen und dadurch jeweils einen Niveauunterschied h21 zwischen der Stegfläche 10a des Formkerns 10 und der ersten Stützoberfläche 21a der ersten Stützeinrichtung 21 und einen Niveauunterschied h22 zwischen der Stegfläche 10a des Formkerns 10 und der zweiten Stützoberfläche 22a der zweiten Stützeinrichtung 22 einzustellen. Optional ist die Hubeinrichtung 40 auch dazu ausgebildet, einen seitlichen Abstand zwischen den Stützeinrichtungen 21, 22 und dem Formkern 10 einzustellen. Bei der in den Fig. 4 bis 8 beispielhaft dargestellten Vorrichtung 1 ist der Formkern 10 ortsfest angeordnet, und die Stützeinrichtungen 21, 22 sind jeweils mittels der Hubeinrichtung 40 in der Hubrichtung H verfahrbar. Allgemein sind die erste Stützoberfläche 21a entlang der ersten Seitenfläche 10b des Formkerns 10 und die zweite Stützoberfläche 22a entlang der zweiten Seitenfläche 10c des Formkerns 10 jeweils gegenüber der Stegfläche 10a des Formkerns 10 absenkbar, wie ein Vergleich der Fig. 6, 7 und 8 zeigt. Alternativ hierzu können auch die Stützeinrichtungen 21, 22 jeweils ortsfest angeordnet und der Formkern 10 mittels der Hubeinrichtung 40 bewegbar sein. In diesem Fall ist die Stegfläche 10a des Formkerns 10 gegenüber der ersten und der zweiten Stützoberfläche 21a, 22a in der Hubrichtung H ausfahrbar. Allgemein sind mittels der Hubeinrichtung 40 die Seitenränder 23A, 24A der Stützeinrichtungen 21, 22 und die Seitenflächen 10b, 10c des Formkerns 10 relativ zueinander zumindest in der Hubrichtung H bewegbar.

Die Hubeinrichtung 40 kann beispielsweise durch einen oder mehrere Hydraulikzylinder gebildet sein kann, wie in den Fig. 4 bis 8 schematisch gezeigt. Selbstverständlich kann als Hubeinrichtung 40 auch eine Hebelkinematik oder dergleichen vorgesehen sein.

Der Formkern 10 und die Stützeinrichtungen 21, 22 sind auf dem optionalen Sockel 70 angeordnet. Die Hubeinrichtung 40 kann ebenfalls an dem Sockel 70 gelagert sein. Wie in Fig. 5 beispielhaft dargestellt ist, kann insbesondere die Grundplatte 11, auf welcher der Formkern 10 angeordnet ist, auf dem Sockel 70 angeordnet sein.

Die Folieneinrichtung 30 weist eine gasdichte elastisch verformbare Folie 31 und optional einen Rahmen 32 auf. Die Folie 31 weist eine flächige Erstreckung auf, die groß genug ist, um die Stützoberfläche 21a, 22a sowie den Formkern 10 vollständig abzudecken. Ein Umfangsrandbereich 31A der Folie 31 ist an dem optionalen einen Rahmen 32 gasdicht befestigt.

Durch Abdecken der Stützflächen 21a, 22a und des Formkerns 10 mit der Folie 31 ist ein Zwischenraum 33 zwischen dem Formkern 10, den Stützeinrichtungen 21, 22 und der Folie 31 herstellbar. Dieser Zwischenraum 33 ist mittels der Evakuierungseinrichtung 50 evakuierbar, wodurch die Folie 31 an die Stützflächen 21a, 22a, die Stegfläche 10a des Formkerns 10 und je nach Position der Stützeinrichtungen 21, 22 an die Seitenflächen 10b, 10c des Formkerns 10 angesaugt wird.

Weist die Folieneinrichtung 30 einen optionalen Rahmen 32 auf und sind der Formkern 10 sowie die Stützeinrichtungen 21, 22 auf einem optionalen Sockel 70 angeordnet, wie dies in den Fig. 4 bis 8 beispielhaft gezeigt ist, kann durch die Folieneinrichtung 30 und den Sockel 70 vorteilhaft ein geschlossener, gasdichter Arbeitsraum 34 gebildet werden, in welchem der Formkern 10 und die Stützeinrichtungen 21, 22 angeordnet sind. Die Fig. 5 bis 8 zeigen die Folieneinrichtung 30 in einer Schließposition, in welcher der Rahmen 32 gasdicht an dem Sockel 70 anliegt und die Folie 31 den Formkern 10 und die Stützeinrichtungen 21, 22 vollständig abdeckt, sodass der geschlossene Arbeitsraum 34 ausgebildet ist.

Die Folie 31 kann insbesondere aus einem Kunststoffmaterial gebildet sein, insbesondere aus Silikongummi-Mischungen, wie beispielsweise Mositegummi ®. Auf der Folie 31 können bereichsweise Versteifungselemente in Form von Streben oder Flächen aus einem Verstärkungsmaterial, wie z.B. einem faserverstärkten Kunststoff, Holz, Metall oder dergleichen angeordnet bzw. fixiert sein (nicht gezeigt). Diese Versteifungselemente verhindern eine Verformung oder reduzieren die Verformbarkeit der Folie 31 in diesen Bereichen.

Die Evakuierungseinrichtung 50 ist in den Fig. 4 bis 8 lediglich schematisch als funktionaler Block dargestellt und dient zum Absaugen von Gas aus dem Zwischenraum 33 bzw. dem Arbeitsraum 34, wobei die Evakuierungseinrichtung 50 in fluidleitender Weise an den Zwischenraum 33 bzw. den Arbeitsraum 34 angeschlossen ist. Die Evakuierungseinrichtung 50 ist insbesondere zur Ausbildung eines Vakuums in dem Zwischenraum 33 bzw. dem Arbeitsraum 34 geeignet und kann beispielsweise als Vakuumpumpe oder dergleichen ausgebildet sein.

Die in Fig. 11 schematisch gezeigte die Vorrichtung 1 zusätzlich eine optionale erste Druckplatte 61 und eine optionale zweite Druckplatte 62 auf. Im Übrigen ist die in Fig. 11 gezeigte Vorrichtung 1 identisch zu der Anhand der Fig. 4 bis 8 und der Fig. 10 beschriebenen Vorrichtung 1.

Die erste und die zweite Druckplatte 61, 62 können jeweils als sich flächig erstreckende Platten ausgebildet sein. Optional weist die erste Druckplatte 61 identische Abmessungen wie die erste Stützeinrichtung 21 auf und die zweite Druckplatte 62 weist identische Abmessungen wie die zweite Stützeinrichtung 22 auf. Auch ist denkbar, dass die erste und die zweite Druckplatte 61, 62 jeweils eine identische Längserstreckung aufweisen, wie die erste bzw. die zweite Stützeinrichtung 21, 22, ansonsten aber mit geringerer Breite ausgeführt sind. Die erste Druckplatte 61 weist allgemein eine erste Anlagefläche 61a auf, die zur Anlage an einen ersten Randbereich 2A der Fasermatte 2 vorgesehen ist. Ebenso weist die zweite Druckplatte 62 allgemein eine zweite Anlagefläche 62a auf, die zur Anlage an einen zweiten Randbereich 2B der Fasermatte 2 vorgesehen ist. Die Druckplatten 61, 62 dienen somit dem Klemmen eines Randbereichs 2A, 2B einer Fasermatte 2 zwischen der Anlagefläche 61a, 62a und der Stützfläche 21a, 22a. Wie in Fig. 11 dargestellt, ist die erste Druckplatte 61 mittels einer ersten Positioniereinrichtung 63 in einem vorbestimmten Abstand d61 relativ zu der ersten Stützoberfläche 21a positionierbar, wobei die erste Anlagefläche 61a der ersten Stützoberfläche 21a zugewandt ist. Die zweite Druckplatte 62 ist mittels einer zweiten Positioniereinrichtung 64 in einem vorbestimmten Abstand d62 relativ zu der zweiten Stützoberfläche 22a positionierbar, wobei die zweite Anlagefläche 62a der zweiten Stützoberfläche 22a zugewandt ist. Die Positioniereinrichtungen 63, 64 können insbesondere als Stellschrauben realisiert sein, welche die erste Druckplatte 61 an die erste Stützeinrichtung 21 und die zweite Druckplatte 62 an die zweite Stützeinrichtung 22 koppeln, wie dies in Fig. 11 schematisch dargestellt ist. Mittels der ersten Positioniereinrichtung 63 ist ein vorbestimmter erster Abstand d61 zwischen der ersten Druckplatte 61 und der ersten Stützeinrichtung 21, insbesondere zwischen der ersten Anlagefläche 61a und der ersten Stützoberfläche 21a einstellbar. Mittels der zweiten Positioniereinrichtung 64 ist ein vorbestimmter zweiter Abstand d62 zwischen der zweiten Druckplatte 62 und der zweiten Stützeinrichtung 22, insbesondere zwischen der zweiten Anlagefläche 62a und der zweiten Stützoberfläche 22a einstellbar.

Im Folgenden wird ein Verfahren zur Herstellung eines Faservorformlings 3 beschrieben. Dieses Verfahren kann insbesondere mithilfe der voranstehend Beschriebenen Vorrichtung 1 durchgeführt werden. Im Folgenden wird deshalb auf die voranstehende Beschreibung Bezug genommen.

In einem ersten Schritt des Verfahrens erfolgt ein Auflegen einer Fasermatte 2 auf eine Ablageoberfläche 5, wie dies beispielhaft in Fig. 4 gezeigt ist. Die Ablagefläche 5 ist durch die Stegfläche 10a des Formkerns 10, die erste Stützoberfläche 21a der ersten Stützeinrichtung 21 und die zweite Stützoberfläche 22a der zweiten Stützeinrichtung 22 gebildet, wobei sich die erste Stützoberfläche 21a und die zweite Stützoberfläche 22a jeweils seitlich an die Stegfläche 10a des Formkerns 10 anschließen. Beim Ablegen der Fasermatte 2 sind die Stegfläche 10a des Formkerns 10, die erste Stützoberfläche 21a und die zweite Stützoberfläche 22a optional in einer Ebene gelegen bzw. bilden eine Ebene aus, wie dies beispielhaft in Fig. 4 dargestellt ist. Die Fasermatte 5 wird insbesondere mit einem ersten Randbereich 2A auf die erste Stützoberfläche 21a, mit einem entgegengesetzt zu dem ersten Randbereich 2A gelegenen zweiten Randbereich 2B auf die zweite Stützoberfläche 22a und mit einem zwischen dem ersten und dem zweiten Randbereich 2A, 2B gelegenen Mittelbereich auf die Stegfläche 10a des Formkerns 10 abgelegt.

Optional kann nach dem Ablegen der Fasermatte 2 ein Anpressen des ersten Randbereichs 2A der Fasermatte 2 an die erste Stützoberfläche 21a mittels der ersten Druckplatte 62 und ein Anpressen des zweiten Randbereichs 2B der Fasermatte 2 an die zweite Stützoberfläche 22a mittels der zweiten Druckplatte 62 erfolgen, wie dies beispielhaft in Fig. 11 gezeigt ist. Hierzu werden die Druckplatten 61, 62 mittels der Positioniereinrichtung 63, 64 relativ zu der jeweiligen Stützeinrichtung 21, 22 mit dem ersten bzw. zweiten Abstand d61, d62 positioniert. Der erste und der zweite Abstand d61, d62 werden insbesondere derart eingestellt, dass die Randbereiche 2A, 2B der Fasermatte mit einer gewünschten Klemmkraft zwischen den Anlageflächen 61a, 62a der Druckplatten 61, 62 und den Stützoberflächen 21a, 22a der Stützeinrichtungen 21, 22 geklemmt werden.

Anschließend erfolgt ein Abdecken der Fasermatte 2 mit der Folie 31. Wie dies in Fig. 5 beispielhaft dargestellt ist, kann dies beispielsweise dadurch erfolgen, dass die Folieneinrichtung 30 in der Schließposition gegenüber dem Sockel 70 angeordnet und dadurch der geschlossene Arbeitsraum 34 um den Formkern 10, die Stützeinrichtungen 21, 22 und die abgelegte Fasermatte 2 gebildet wird. Bei dem in Fig. 11 gezeigten optionalen Anpressen der Randbereiche 2A, 2B der Fasermatte 2 mittels der Druckplatten 61, 62 werden die Druckplatten 61, 62 sowie die freiliegenden Bereiche der Fasermatte 2 durch die Folie 31 abgedeckt, wie dies in Fig. 11 schematisch dargestellt ist.

Weiterhin wird ein Unterdruck zwischen der Folie 31 und der Ablageoberfläche 5 erzeugt, beispielsweise durch Evakuieren des Arbeitsraums 34 mithilfe der Evakuierungseinrichtung 50. Dadurch wird die Fasermatte 2 flächig an die Ablageoberfläche 5 angepresst, wie dies in Fig. 6 beispielhaft gezeigt ist.

Anschließend werden die Stützeinrichtungen 21, 22 und der Formkern 10 relativ zueinander mittels der Hubeinrichtung 40 in der Hubrichtung H bewegt. Dadurch werden die Stützflächen 21a, 22a entlang der Seitenflächen 10b, 10c des Formkerns 10 gegenüber der Stegfläche 10a des Formkerns 10 abgesenkt bzw. ein Niveauunterschied h21, h22 zwischen der Stegfläche 10a und den Stützflächen 21a, 22b eingestellt, insbesondere sukzessive vergrößert. Aufgrund des herrschenden Unterdrucks in dem Arbeitsraum 34 wird die Folie 31 an den Formkern 10 und die Stützeinrichtungen 21, 22 angesogen. Die Randbereiche 2A, 2B der Fasermatte 2 werden durch die Relativbewegung des Formkerns 10 und der Stützeinrichtungen 21, 22 von den Stützoberflächen 21a, 22a abgezogen und an die Seitenflächen 10b, 10c des Formkerns 10 angelegt, wie dies in den Fig. 7, 8 und 11 gezeigt ist. Aufgrund der Relativbewegung des Formkerns 10 und der Stützeinrichtungen 21, 22 unter gleichzeitiger Ausübung einer Druckkraft auf die Randbereiche 2A, 2B der Fasermatte 2 - entweder durch die Folie 31 oder durch die Druckplatten 61, 62 - gleiten die Randbereiche 2A, 2B der Fasermatte 2 an den Stützoberflächen 21a, 22a, wobei eine von den Seitenflächen 10b, 10c des Formkerns 10 weg gerichtete Reibungskraft F auf die Randbereiche wirkt. Auf diese Weise wird die Gefahr, dass sich beim Anlegen der Randbereiche 2A, 2B der Fasermatte 2 an die Seitenflächen 10b, 10c des Formkerns 10 Falten bilden, verringert.

In dem Fall, dass die Randbereiche 2A, 2B der Fasermatte 2 durch Druckplatten 61, 62 an die Stützeinrichtungen 21, 22 angepresst werden, werden währen der Relativbewegung der Stützeinrichtungen 21, 22 und des Formkerns 10 die erste Druckplatte 61 in einem konstanten Abstand d61 zu der ersten Stützoberfläche 21a und die zweite Druckplatte 62 in einem konstanten Abstand d62zu der zweiten Stützoberfläche 22a gehalten.

Durch das Anlegen der Randbereiche 2A, 2B der Fasermatte 2 an die Seitenflächen 10b, 10c des Formkerns 10 erfolgt ein Umformen der Fasermatte 2 in die Form des Faservorformlings 3. Optional kann vorgesehen sein, dass die Randbereiche 2A, 2B der Fasermatte 2 jeweils vollständig an die Seitenflächen 10b, 10c des Formkerns 10 angelegt werden. Jedoch kann auch vorgesehen sein, dass zwischen den Stützoberflächen 21a, 22a und der Stegfläche 10a ein derartiger Niveauunterschied h21, h22 eingestellt wird, dass jeweils ein streifenförmiger Abschnitt 2C, 2D der Randbereiche 2A, 2B der Fasermatte 2 auf der jeweiligen Stützfläche 21a, 22a verbleibt. Diese streifenförmigen Abschnitte 2C, 2D können insbesondere jeweils die optionalen Kontaktschienen 27, 28 überlappen.

Anschließend erfolgt optional ein Aktivieren eines in der Fasermatte 2 enthaltenen Bindermaterials durch Erwärmen der Fasermatte 2. Das Bindermaterial wird durch die Erwärmung aktiviert, was zu einem Härten oder Schmelzen und Erstarren des Bindermaterials und damit zu einer Fixierung der Form oder Gestalt der Fasermatte 2 führt.

Zum Erwärmen der Fasermatte 2 können insbesondere die Kontaktschienen 27, 28 der Stützeinrichtungen 21, 22 und/oder die Formkern-Kontaktschienen 17, 18 mit den Polen der elektrischen Spannungsquelle U elektrisch leitend verbunden werden, wie dies in Fig. 8 schematisch angedeutet ist. Dies führt dazu, dass im Bereich der streifenförmigen Abschnitte 2C, 2D der Randbereiche 2A, 2B der Fasermatte 2, die auf den Kontaktschienen 27, 28 aufliegen, und/oder im Bereich der Fasermatte 2, der an dem Formkern 10 anliegt, ein elektrischer Stromfluss durch die Fasern der Fasermatte 2 erzeugt wird. Da die Fasern einen elektrischen Widerstand bilden, erwärmen sich diese Fasern und was zur Aktivierung des Bindermaterials führt.

Optional kann vor einem Lösen des Vakuums eine Erhöhung des seitlichen Abstands der Stützeinrichtungen 21, 22 zu dem Formkern 10 erfolgen, um ein Ablösen der Folie 31 von dem Vorformling zu erzeugen. Dadurch kann ein Stauchen der an den Seitenflächen 10b, 10c des Formkerns 10 anliegenden Flanschbereiche des Vorformlings beim Entformen, also beim Entfernen des Vorformlings von dem Formkern 10 vermieden werden.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Vorrichtung
- 2: Fasermatte
- 2A: erster Randbereich der Fasermatte
- 2B: zweiter Randbereich der Fasermatte
- 3: Faservorformling
- 5: Ablageoberfläche
- 6: Quersteg des Faservorformlings
- 7: erster Seitensteg des Faservorformlings
- 8: zweiter Seitensteg des Faservorformlings
- 10: Formkern
- 10a: Stegfläche des Formkerns
- 10b: erste Seitenfläche des Formkerns
- 10c: zweite Seitenfläche des Formkerns
- 11: Grundplatte
- 12, 13: Teilkerne
- 17: erste Formkern-Kontaktschiene
- 18: zweite Formkern-Kontaktschiene
- 21: erste Stützeinrichtung
- 21a: erste Stützoberfläche
- 22: zweite Stützeinrichtung
- 22a: zweite Stützoberfläche
- 23: Randbereich der ersten Stützeinrichtung
- 23A: Seitenrand der ersten Stützeinrichtung
- 24: Randbereich der zweiten Stützeinrichtung
- 24A: Seitenrand der zweiten Stützeinrichtung
- 25: erste Nut
- 26: zweite Nut
- 27: erste Kontaktschiene
- 28: zweite Kontaktschiene
- 29: Befestigungsschraube
- 30: Folieneinrichtung
- 31: Folie
- 31A: Umfangsrandbereich der Folie
- 32: Rahmen
- 33: Zwischenraum
- 34: Arbeitsraum
- 40: Hubeinrichtung
- 50: Evakuierungseinrichtung
- 61: erste Druckplatte
- 62: zweite Druckplatte
- 63: erste Positioniereinrichtung
- 64: zweite Positioniereinrichtung
- 70: Sockel
- b27: Breite der Kontaktschiene
- C: Querrichtung
- d61: Abstand der ersten Druckplatte zu der ersten Stützoberfläche
- d62: Abstand der zweiten Druckplatte zu der zweiten Stützoberfläche
- F: Reibungskraft
- H: Hubrichtung
- h21: Niveauunterschied zwischen der Stegfläche und der ersten Stützoberfläche
- h22: Niveauunterschied zwischen der Stegfläche und der zweiten Stützoberfläche
- L: Längsrichtung
- q27: Überstand
- S1: erste Seite
- S2: zweite Seite
- t25: Nuttiefe
- U: Spannungsquelle
- W: Anschlussleitung

## Patentansprüche

1. Verfahren zur Herstellung eines Faservorformlings (3) mit folgenden Verfahrensschritten:
Auflegen einer Fasermatte (2) auf eine Ablageoberfläche (5), welche durch eine Stegfläche (10a) eines Formkerns (10), eine erste Stützoberfläche (21a) einer ersten Stützeinrichtung (21) und eine zweite Stützoberfläche (22a) einer zweiten Stützeinrichtung (22) gebildet ist, wobei die erste Stützoberfläche (21a) und die zweite Stützoberfläche (22a) sich jeweils seitlich an die Stegfläche (10a) des Formkerns (10) anschließen;
Abdecken der Fasermatte (2) mit einer elastisch verformbaren, gasdichten Folie (31);
Flächiges Anpressen der Fasermatte (2) an die Ablageoberfläche (5) durch Erzeugen eines Unterdrucks zwischen der Folie (31) und der Ablageoberfläche (5);
Anlegen der Fasermatte (2) an sich quer zu der Stegfläche (10a) erstreckende Seitenflächen (10b; 10c) des Formkerns (10) durch Bewegen der Stützeinrichtungen (21; 22) und des Formkerns (10) relativ zueinander derart, dass ein Niveauunterschied (h21; h22) zwischen der Stegfläche (10a) des Formkerns (10) und den Stützoberflächen (21a; 22a) der Stützeinrichtungen (21; 22) vergrößert wird; und
Erwärmen der Fasermatte (2) und dadurch Aktivieren eines in der Fasermatte (2) enthaltenen Bindermaterials oder Verändern der Viskosität eines Matrixmaterials der Fasermatte (2) zum Fixieren der Fasern der Fasermatte (2) in derjenigen Position, die diese durch das Anlegen der Fasermatte (2) an die Seitenflächen (10b; 10c) des Formkerns (10) erhalten haben, wobei das Erwärmen durch Erzeugen eines elektrischen Stromflusses durch elektrisch leitende Fasern der Fasermatte erfolgt.

2. Verfahren nach Anspruch 1, wobei die erste Stützoberfläche (21a) der ersten Stützeinrichtung (21) und die zweite Stützoberfläche (22a) der zweiten Stützeinrichtung (22) die Stegfläche (10a) des Formkerns (10) beim Ablegen der Fasermatte (2) stetig fortsetzen.

3. Verfahren nach Anspruch 1 oder 2, wobei das Anlegen der Fasermatte (2) an die Seitenflächen (10b; 10c) des Formkerns (10) ein Absenken der ersten und der zweiten Stützeinrichtungen (21; 22) gegenüber der Stegfläche (10a) des Formkerns (10) und/oder ein Anheben des Formkerns (10) gegenüber der ersten und der zweiten Stützoberfläche (21a; 22a) umfasst.

4. Verfahren nach einem der voranstehenden Ansprüche, wobei der elektrische Stromfluss dadurch erzeugt wird, dass eine an der ersten Stützoberfläche (21a) angeordnete erste Kontaktschiene (27) und eine an der zweiten Stützoberfläche (22a) angeordnete zweite Kontaktschiene (28) mit einer elektrischen Spannungsquelle (U) verbunden werden.

5. Verfahren nach einem der voranstehenden Ansprüche, wobei der elektrische Stromfluss dadurch erzeugt wird, dass zumindest zwei an der Stegfläche (10a) und/oder den Seitenflächen (10b; 10c) des Formkerns (10) angeordnete Formkern-Kontaktschienen (17; 18) mit einer elektrischen Spannungsquelle (U) verbunden werden.

6. Verfahren nach einem der voranstehenden Ansprüche, zusätzlich mit folgendem Verfahrensschritt:
Anpressen einer ersten Druckplatte (61) auf einen ersten Randbereich (2A) der auf der Ablageoberfläche (5) abgelegten Fasermatte (2), wobei der erste Randbereich (2A) der Fasermatte (2) auf der ersten Stützoberfläche (21a) abgelegt ist, und einer zweiten Druckplatte (62) auf einen zweiten Randbereich (2B) der auf der Ablageoberfläche (5) abgelegten Fasermatte (2), wobei der zweite Randbereich (2B) der Fasermatte (2) auf der zweiten Stützoberfläche (22a) abgelegt ist, wobei die erste Druckplatte (61) in einem konstanten Abstand (d61) zu der ersten Stützoberfläche (21a) und die zweite Druckplatte (62) in einem konstanten Abstand (d62)zu der zweiten Stützoberfläche (22a) gehalten wird.

7. Vorrichtung (1) zur Herstellung eines Faservorformlings (3), mit:
einem Formkern (10) mit einer Stegfläche (10a), einer sich quer zu der Stegfläche (10a) entlang einer Hubrichtung (H) erstreckenden ersten Seitenfläche (10b) und einer sich quer zu der Stegfläche (10a) entlang der Hubrichtung (H) erstreckenden zweiten Seitenfläche (10c);
einer ersten Stützeinrichtung (21) mit einer ersten Stützoberfläche (21a) und
einer über die erste Stützoberfläche (21a) hervorstehenden ersten Kontaktschiene (27), wobei die erste Stützeinrichtung (21) auf einer durch die erste Seitenfläche (10b) des Formkerns (10) definierten ersten Seite (S1) des Formkerns (10) angeordnet ist;
einer zweiten Stützeinrichtung (22) mit einer zweiten Stützoberfläche (22a) und einer über die zweite Stützoberfläche (22a) hervorstehenden zweiten Kontaktschiene (28), wobei die erste und die zweite Kontaktschiene (27; 28) mit einer elektrischen Spannungsquelle (U) verbindbar sind, und wobei die zweite Stützeinrichtung (22) auf einer durch die zweite Seitenfläche (10c) des Formkerns (10) definierten zweiten Seite (S2) des Formkerns (10) angeordnet ist;
einer Folieneinrichtung (30) mit einer elastisch verformbaren, gasdichten Folie (31) zum Herstellen eines evakuierbaren Zwischenraums (33) zwischen dem Formkern (10), den Stützeinrichtungen (21; 22) und der Folie (31);
einer Hubeinrichtung (40) mittels derer der Formkern (10) und die Stützeinrichtungen (21; 22) relativ zueinander in der Hubrichtung bewegbar sind; und
einer Evakuierungseinrichtung (50) zum Evakuieren des Zwischenraums.

8. Vorrichtung (1) nach Anspruch 7, wobei die erste Kontaktschiene (27) in einer in der ersten Stützoberfläche (21a) ausgebildeten ersten Nut (25) und die zweite Kontaktschiene (28) in einer in der zweiten Stützoberfläche (22a) ausgebildeten zweiten Nut (26) angeordnet ist.

9. Vorrichtung (1) nach Anspruch 8, wobei die erste Kontaktschiene (27) sich entlang eines der ersten Seitenfläche (10b) des Formkerns (10) zugewandten Randbereichs (23) der ersten Stützeinrichtung (21) und die zweite Kontaktschiene (28) sich entlang eines der zweiten Seitenfläche (10c) des Formkerns (10) zugewandten Randbereichs (24) der zweiten Stützeinrichtung (22) erstreckt.

10. Vorrichtung (1) nach einem der Ansprüche 7 bis 9, wobei der Formkern (10) eine erste Formkern-Kontaktschiene (17) und eine zweite Formkern-Kontaktschiene (18) aufweist, wobei die Formkern-Kontaktschienen (17; 18) jeweils über die Stegfläche (10a) und/oder die Seitenflächen (10b; 10c) des Formkerns (10) hervorstehen.

11. Vorrichtung (1) zur Herstellung eines Faservorformlings (3), mit:
einem Formkern (10) mit einer Stegfläche (10a), einer sich quer zu der Stegfläche (10a) entlang einer Hubrichtung (H) erstreckenden ersten Seitenfläche (10b), einer sich quer zu der Stegfläche (10a) entlang der Hubrichtung (H) erstreckenden zweiten Seitenfläche (10c), einer ersten Formkern-Kontaktschiene (17) und einer zweite Formkern-Kontaktschiene (18), wobei die Formkern-Kontaktschienen (17; 18) jeweils über die Stegfläche (10a) und/oder die Seitenflächen (10b; 10c) des Formkerns (10) hervorstehen, wobei die erste und die zweite Formkern-Kontaktschiene (17; 18) mit einer elektrischen Spannungsquelle verbindbar sind;
einer ersten Stützeinrichtung (21) mit einer ersten Stützoberfläche (21a), wobei die erste Stützeinrichtung (21) auf einer durch die erste Seitenfläche (10b) des Formkerns (10) definierten ersten Seite (S1) des Formkerns (10) angeordnet ist;
einer zweiten Stützeinrichtung (22) mit einer zweiten Stützoberfläche (22a), wobei die zweite Stützeinrichtung (22) auf einer durch die zweite Seitenfläche (10c) des Formkerns (10) definierten zweiten Seite (S2) des Formkerns (10) angeordnet ist;
einer Folieneinrichtung (30) mit einer elastisch verformbaren, gasdichten Folie (31) zum Herstellen eines evakuierbaren Zwischenraums (33) zwischen dem Formkern (10), den Stützeinrichtungen (21; 22) und der Folie (31);
einer Hubeinrichtung (40) mittels derer der Formkern (10) und die Stützeinrichtungen (21; 22) relativ zueinander in der Hubrichtung bewegbar sind; und
einer Evakuierungseinrichtung (50) zum Evakuieren des Zwischenraums.

12. Vorrichtung (1) nach einem der Ansprüche 7 bis 11, wobei die Vorrichtung (1) zusätzlich eine erste Druckplatte (61) und eine zweite Druckplatte (62) aufweist, wobei die erste Druckplatte (61) mittels einer ersten Positioniereinrichtung (63) in einem vorbestimmten Abstand (d61) relativ zu der ersten Stützoberfläche (21a) positionierbar ist, und wobei die zweite Druckplatte (62) mittels einer zweiten Positioniereinrichtung (64) in einem vorbestimmten Abstand (d62) relativ zu der zweiten Stützoberfläche (22a) positionierbar ist.

13. Vorrichtung (1) nach einem der Ansprüche 9 bis 12, wobei die Vorrichtung (1) zusätzlich einen Sockel (70) aufweist, auf dem der Formkern (10) und die Stützeinrichtungen (21; 22) angeordnet sind.

14. Vorrichtung (1) nach Anspruch 13, wobei die Folieneinrichtung (30) einen Rahmen (32) aufweist, an welchem die Folie (31) gasdicht befestigt ist, wobei der Rahmen (32) der Folieneinrichtung (30) gasdicht an dem Sockel (70) befestigbar ist.

## Claims

1. A method of manufacturing a fibre preform (3) comprising the following method steps:
laying a fibre mat (2) on a depositing surface (5) which is formed by a web surface (10a) of a mould core (10), a first support surface (21a) of a first support device (21) and a second support surface (22a) of a second support device (22), the first support surface (21a) and the second support surface (22a) each adjoining the web surface (10a) of the mould core (10) laterally;
covering the fibre mat (2) with an elastically deformable, gas-tight foil (31);
pressing the fibre mat (2) flat against the depositing surface (5) by generating a vacuum between the foil (31) and the depositing surface (5);
placing the fibre mat (2) against side surfaces (10b; 10c) of the mould core (10) extending transversely to the web surface (10a) by moving the support devices (21; 22) and the mould core (10) relative to each other in such a way that a difference in level (h21; h22) between the web surface (10a) of the mould core (10) and the support surfaces (21a; 22a) of the support devices (21; 22) is increased; and
heating the fibre mat (2) and thereby activating a binder material contained in the fibre mat (2) or changing the viscosity of a matrix material of the fibre mat (2) to fix the fibres of the fibre mat (2) in the position obtained by applying the fibre mat (2) to the side surfaces (10b;
10c) of the mould core (10), the heating being effected by generating an electric current flow through electrically conductive fibres of the fibre mat.

2. The method according to claim 1, wherein the first support surface (21a) of the first support device (21) and the second support surface (22a) of the second support device (22) continuously continue the web surface (10a) of the mould core (10) when the fibre mat (2) is deposited.

3. The method according to claim 1 or 2, wherein applying the fibre mat (2) to the side surfaces (10b; 10c) of the mould core (10) comprises lowering the first and second support devices (21; 22) relative to the web surface (10a) of the mould core (10) and/or raising the mould core (10) relative to the first and second support surfaces (21a; 22a).

4. The method according to any one of the preceding claims, wherein the electric current flow is generated by connecting a first contact rail (27) disposed on the first support surface (21a) and a second contact rail (28) disposed on the second support surface (22a) to an electric voltage source (U).

5. The method according to any one of the preceding claims, wherein the electric current flow is generated by connecting at least two mould core contact bars (17; 18) arranged on the web surface (10a) and/or the side surfaces (10b; 10c) of the mould core (10) to an electric voltage source (U).

6. The method according to any one of the preceding claims, additionally comprising the following method step:
pressing a first pressure plate (61) onto a first edge portion (2A) of the fibre mat (2) deposited on the depositing surface (5), the first edge portion (2A) of the fibre mat (2) being deposited on the first support surface (21a), and a second pressure plate (62) onto a second edge portion (2B) of the fibre mat (2) deposited on the depositing surface (5), the second edge portion (2B) of the fibre mat (2) being deposited on the second support surface (22a), wherein the first pressure plate (61) is kept at a constant distance (d61) from the first support surface (21a) and
the second pressure plate (62) is kept at a constant distance (d62) from the second support surface (22a).

7. A device (1) for manufacturing a fibre preform (3), comprising:
a mould core (10) having a web surface (10a), a first side surface (10b) extending transversely to the web surface (10a) along a lift direction (H) and a second side surface (10c) extending transversely to the web surface (10a) along the lift direction (H);
a first support device (21) having a first support surface (21a) and a first contact rail (27) projecting beyond the first support surface (21a), the first support device (21) being arranged on a first side (S1) of the mould core (10) defined by the first side surface (10b) of the mould core (10);
a second support device (22) having a second support surface (22a) and a second contact rail (28) projecting beyond the second support surface (22a), wherein the first and second contact rails (27; 28) are connectable to an electrical voltage source (U), and wherein the second support device (22) is arranged on a second side (S2) of the mould core (10) defined by the second side surface (10c) of the mould core (10);
a foil device (30) with an elastically deformable, gas-tight foil (31) for producing an evacuable intermediate space (33) between the mould core (10), the support devices (21; 22) and the foil (31);
a lift device (40) by means of which the mould core (10) and the support devices (21; 22) are movable relative to each other in the lift direction; and
an evacuation device (50) for evacuating the intermediate space.

8. The device (1) according to claim 7, wherein the first contact rail (27) is disposed in a first groove (25) formed in the first support surface (21a) and the second contact rail (28) is disposed in a second groove (26) formed in the second support surface (22a).

9. The device (1) according to claim 8, wherein the first contact rail (27) extends along an edge region (23) of the first support device (21) facing the first side surface (10b) of the mould core (10) and the second contact rail (28) extends along an edge region (24) of the second support device (22) facing the second side surface (10c) of the mould core (10).

10. The device (1) according to any one of claims 7 to 9, wherein the mould core (10) comprises a first mould core contact rail (17) and a second mould core contact rail (18), the mould core contact rails (17; 18) each projecting beyond the web surface (10a) and/or the side surfaces (10b; 10c) of the mould core (10).

11. A device (1) for manufacturing a fibre preform (3), comprising:
a mould core (10) having a web surface (10a), a first side surface (10b) extending transversely of the web surface (10a) along a lift direction (H), a second side surface (10c) extending transversely of the web surface (10a) along the lift direction (H), a first mould core contact rail (17) and a second mould core contact rail (18), the mould core contact rails (17; 18) each projecting beyond the web surface (10a) and/or the side surfaces (10b; 10c) of the mould core (10), the first and second mould core contact rails (17; 18) being connectable to an electric voltage source;
a first support device (21) having a first support surface (21a), the first support device (21) being arranged on a first side (S1) of the mould core (10) defined by the first side surface (10b) of the mould core (10);
a second support device (22) having a second support surface (22a), the second support device (22) being arranged on a second side (S2) of the mould core (10) defined by the second side surface (10c) of the mould core (10);
a foil device (30) with an elastically deformable, gas-tight foil (31) for producing an evacuable intermediate space (33) between the mould core (10), the support devices (21; 22) and the foil (31);
a lift device (40) by means of which the mould core (10) and the support devices (21; 22) can be moved relative to one another in the lift direction; and
an evacuation device (50) for evacuating the intermediate space.

12. The device (1) according to any one of claims 7 to 11, wherein the device (1) additionally comprises a first pressure plate (61) and a second pressure plate (62), wherein the first pressure plate (61) is positionable by means of a first positioning means (63) at a predetermined distance (d61) relative to the first support surface (21a), and wherein the second pressure plate (62) is positionable by means of a second positioning means (64) at a predetermined distance (d62) relative to the second support surface (22a).

13. The device (1) according to any one of claims 9 to 12, wherein the device (1) additionally comprises a base (70) on which the mould core (10) and the support devices (21; 22) are arranged.

14. The device (1) according to claim 13, wherein the foil device (30) comprises a frame (32) to which the foil (31) is attached in a gas-tight manner, wherein the frame (32) of the foil device (30) can be attached to the base (70) in a gas-tight manner.

## Revendications

1. Procédé de fabrication d'une préforme en fibre (3) comprenant les étapes suivantes poser d'un mat de fibres (2) sur une surface de dépôt (5) qui est formée par une surface de bande (10a) d'un noyau de moule (10), une première surface de support (21a) d'un premier dispositif de support (21) et une deuxième surface de support (22a) d'un deuxième dispositif de support (22), la première surface de support (21a) et la deuxième surface de support (22a) étant chacune contiguës latéralement à la surface de bande (10a) du noyau de moule (10); recouvrir le mat de fibres (2) d'un feuille étanche aux gaz, élastiquement déformable (31); presser le mat de fibres (2) à plat contre la surface de dépôt (5) en générant un vide entre le feuille (31) et la surface de dépôt (5);
placer le mat de fibres (2) contre des surfaces latérales (10b ; 10c) du noyau de moule (10) s'étendant transversalement à la surface de bande (10a) en déplaçant les dispositifs de support (21 ; 22) et le noyau de moule (10) l'un par rapport à l'autre de telle sorte qu'une différence de niveau (h21 ; h22) entre la surface de bande (10a) du noyau de moule (10) et les surfaces de support (21a ; 22a) des dispositifs de support (21 ; 22) soit augmentée; et chauffer le mat de fibres (2) et activer ainsi un matériau liant contenu dans le mat de fibres (2) ou modifier la viscosité d'un matériau de matrice du mat de fibres (2) pour fixer les fibres du mat de fibres (2) dans la position obtenue en appliquant le mat de fibres (2) sur les surfaces latérales (10b ; 10c) du noyau de moule (10), dans lequel le chauffage est effectué en générant un flux de courant électrique à travers les fibres électriquement conductrices du mat de fibres.

2. Procédé selon la revendication 1, dans lequel la première surface de support (21a) du premier dispositif de support (21) et la deuxième surface de support (22a) du deuxième dispositif de support (22) continuent en continu la surface de bande (10a) du noyau de moule (10) lorsque le mat de fibres (2) est déposé.

3. Procédé selon la revendication 1 ou 2, dans lequel l'application du mat de fibres (2) sur les surfaces latérales (10b ; 10c) du noyau de moule (10) comprend l'abaissement des premier et second dispositifs de support (21 ; 22) par rapport à la surface de bande (10a) du noyau de moule (10) et/ou le soulèvement du noyau de moule (10) par rapport aux première et seconde surfaces de support (21a ; 22a).

4. Procédé selon l'une des revendications précédentes, dans lequel le flux de courant électrique est généré en connectant un premier rail de contact (27) disposé sur la première surface de support (21a) et un second rail de contact (28) disposé sur la seconde surface de support (22a) à une source de courant électrique (U).

5. Procédé selon l'une des revendications précédentes, dans lequel le flux de courant électrique est généré en connectant au moins deux barres de contact de noyau de moule (17 ; 18) disposées sur la surface de bande (10a) et/ou les surfaces latérales (10b ; 10c) du noyau de moule (10) à une source de courant électrique (U).

6. Procédé selon l'une des revendications précédentes, comprenant en outre l'étape de méthode suivante:
presser une première plaque de pression (61) sur une première partie de bord (2A) du mat de fibres (2) déposé sur la surface de dépôt (5), la première partie de bord (2A) du mat de fibres (2) étant déposée sur la première surface de support (21a), et presser une deuxième plaque de pression (62) sur une deuxième partie de bord (2B) du mat de fibres (2) déposé sur la surface de dépôt (5) la deuxième partie de bord (2B) du mat de fibres (2) étant déposée sur la deuxième surface de support (22a), dans lequel la première plaque de pression (61) est maintenue à une distance constante (d61) de la première surface de support (21a) et la deuxième plaque de pression (62) est maintenue à une distance constante (d62) de la deuxième surface de support (22a).

7. Dispositif (1) pour la production d'une préforme de fibre (3), comprenant:
un noyau de moule (10) ayant une surface de bande (10a), une première surface latérale (10b) s'étendant transversalement à la surface de bande (10a) le long d'une direction de course (H), et une seconde surface latérale (10c) s'étendant transversalement à la surface de bande (10a) le long de la direction de course (H);
un premier dispositif de support (21) ayant une première surface de support (21a) et un premier rail de contact (27) faisant saillie au-dessus de la première surface de support (21a), le premier dispositif de support (21) étant disposé sur un premier côté (S1) du noyau de moule (10) défini par la première surface latérale (10b) du noyau de moule (10) ;
un deuxième dispositif de support (22) avec une deuxième surface de support (22a) et un deuxième rail de contact (28) dépassant de la deuxième surface de support (22a), le premier et le deuxième rail de contact (27 ; 28) pouvant être reliés à une source de courant électrique (U), et le deuxième dispositif de support (22) étant disposé sur un deuxième côté (S2) du noyau de moule (10) défini par la deuxième surface latérale (10c) du noyau de moule (10);
un dispositif à feuille (30) avec une feuille (31) élastiquement déformable et étanche aux gaz pour la réalisation d'un espace intermédiaire (33) pouvant être évacué entre le noyau du moule (10), les dispositifs de support (21 ; 22) et la feuille (31) ;
un dispositif de levage (40) au dispositif duquel le noyau du moule (10) et les dispositifs de support (21 ; 22) sont mobiles l'un par rapport à l'autre dans la direction de levage ; et
un dispositif d'évacuation (50) pour évacuer l'espace intermédiaire.

8. Dispositif (1) selon la revendication 7, dans lequel le premier rail de contact (27) est disposé dans une première rainure (25) formée dans la première surface de support (21a) et le deuxième rail de contact (28) est disposé dans une deuxième rainure (26) formée dans la deuxième surface de support (22a).

9. Dispositif (1) selon la revendication 8, dans lequel le premier rail de contact (27) s'étend le long d'une zone de bord (23) du premier dispositif de support (21) qui est tournée vers la première surface latérale (10b) du noyau de moule (10) et le deuxième rail de contact (28) s'étend le long d'une zone de bord (24) du deuxième dispositif de support (22) qui est tournée vers la deuxième surface latérale (10c) du noyau de moule (10).

10. Dispositif (1) selon l'une quelconque des revendications 7 à 9, dans lequel le noyau de moule (10) comprend un premier rail de contact de noyau de moule (17) et un second rail de contact de noyau de moule (18), les rails de contact de noyau de moule (17 ; 18) dépassant chacun de la surface de bande (10a) et/ou des surfaces latérales (10b ; 10c) du noyau de moule (10).

11. Dispositif (1) pour la production d'une préforme de fibre (3), comprenant:
un noyau de moule (10) ayant une surface de support (10a), une première surface latérale (10b) s'étendant transversalement à la surface de support (10a) le long d'une direction de course (H), une deuxième surface latérale (10c) s'étendant transversalement à la surface de support (10a) le long de la direction de course (H), un premier rail de contact de noyau de moule (17) et un deuxième rail de contact de noyau de moule (18), les rails de contact de noyau de moule (17; 18) faisant saillie respectivement sur au moins une des surfaces terrestres (10a) et latérales (10b; 10c) du noyau de moule (10), les premier et deuxième rails de contact du noyau de moule (17; 18) pouvant être connectés à une source courant électrique;
un premier dispositif de support (21) ayant une première surface de support (21a), le premier dispositif de support (21) étant disposé sur un premier côté (S1) du noyau de moule (10) défini par la première surface latérale (10b) du noyau de moule (10) ;
un second dispositif de support (22) ayant une seconde surface de support (22a), le second dispositif de support (22) étant disposé sur un second côté (S2) du noyau de moule (10) défini par la seconde surface latérale (10c) du noyau de moule (10);
un dispositif à feuille (30) avec une feuille (31) élastiquement déformable et étanche aux gaz pour la réalisation d'un espace intermédiaire (33) pouvant être évacué entre le noyau du moule (10), les dispositifs de support (21 ; 22) et la feuille (31);
un dispositif de levage (40) au dispositif duquel le noyau du moule (10) et les dispositifs de support (21 ; 22) peuvent être déplacés l'un par rapport à l'autre dans la direction de levage ; et
un dispositif d'évacuation (50) pour évacuer l'espace intermédiaire.

12. Dispositif (1) selon l'une quelconque des revendications 7 à 11, le dispositif (1) comprenant en outre une première plaque de pression (61) et une deuxième plaque de pression (62), la première plaque de pression (61) pouvant être positionnée au dispositif d'un premier dispositif de positionnement (63) à une distance prédéterminée (d61) par rapport à la première surface de support (21a), et la deuxième plaque de pression (62) pouvant être positionnée au dispositif d'un deuxième dispositif de positionnement (64) à une distance prédéterminée (d62) par rapport à la deuxième surface de support (22a).

13. Dispositif (1) selon l'une quelconque des revendications 9 à 12, le dispositif (1) comprenant en outre un socle (70) sur lequel sont disposés le noyau de moule (10) et les dispositifs de support (21 ; 22).

14. Dispositif (1) selon la revendication 13, dans lequel le dispositif à feuille (30) comprend un cadre (32) auquel la feuille (31) est fixée de manière étanche au gaz, dans lequel le cadre (32) du dispositif à feuille (30) peut être fixé à la base (70) de manière étanche au gaz.
